# EUROPEAN PATENT SPECIFICATION

(11) **EP 1 569 488 B1**
(45) Date of publication and mention of the grant of the patent: **20.02.2008**
(21) Application number: 04251154.3
(22) Date of filing: 27.02.2004
(51) Int. Cl.: H04Q 7/38, H04M 3/436

(54) **Method, system, and device for specifying selective override of do-not-disturb functionality**
Verfahren, System und Vorrichtung zur Bestimmung der selektiven Nichtberücksichtigung der do-not-disturb-Funktion
Procédé, système et dispositif pour spécifier la neutralisation sélective de la fonctionnalité ne-pas-déranger

(43) Date of publication of application: 31.08.2005
(60) Divisional application: 07122960.3
(73) Proprietor: Research In Motion Limited, Waterloo, Ontario N2L 3W8 (CA)
(72) Inventor: Xue, Hao, Ottawa, Ontario K2C 2C7 (CA); Islam, Muhammad Khaledul, Ottawa, Ontario K2K 3N4 (CA)
(74) Representative: Rickard, David John

(56) References cited:
- WO-A-02/102040
- US-A- 5 467 388
- US-A1- 2002 085 698

## Description

The invention relates to communication systems and more particularly to call management for systems which provide do-not-disturb (DnD) functions.

In communications systems with voice call features, a user of a device or near a device is often alerted to an incoming call via an indication to the user in audible form such as a tone or ring, in kinesthetic form such as a vibration, or in visual form such as a flashing light. Some communications systems provide devices which alert the user in a relatively non-intrusive manner. However, there are situations when a user may decide not to receive an incoming call. In some communications systems, due to the way in which they operate, an incoming call and its alert can be intrusive and distracting or even dangerous.

In wireless communication systems which provide dispatch services, push-to-talk™ (PTT^{™}) services are often provided. Push-to-talk^{™} services typically provide walkie-talkie-like functionality or two-way half-duplex voice communication which enables a single user to communicate with another single user (as in a private session) or enables the single user to communicate with a group of other users (as in a group session). When referred to herein, walkie-talkie-like functionality and half-duplex voice functionality are to be taken generally to mean any network delivered voice communication functionality which at any one time is capable of transmitting voice communication from a talking or transmitting party's device to a listening or receiving party's device, but does not simultaneously transmit voice communication from the receiving party's device to the talking party's device, while the talking party's device is transmitting voice to the receiving party's device. Groups can operate in automatic answer mode or in manual answer mode. In push-to-talk^{™}, for a group in automatic answer mode, voice reception is instantaneous, and requires no recipient action. For a group in manual answer mode, before voice reception, recipient action is required to accept or decline the incoming talk request. Situations may arise where automatic communication or a request for communication would be intrusive, and a user may wish to have no interruptions from calls for a period of time. Additionally, the user may wish not to have to take any action to deny talk requests during that period.

In known systems, do-not-disturb (DnD) functionality is provided so that the user's device and hence the user are not disturbed by an incoming call. When this feature is active, no incoming call is offered to the user. DnD also blocks other forms of alerting, such as Message Waiting Notification alerting. Do-not-disturb makes the user inaccessible for call delivery. This DnD functionality is provided for users of half-duplex voice systems and full duplex voice systems, who do not want to be disturbed. This feature is also defined in IS-41-based systems.

In known systems providing DnD such as the Push-to-Talk^{™} over Cellular (PoC) system (part of the OMA standard), a user typically requests activation of DnD from the user device, which sends a request to a GLMS (group list management server) or similar call processing server to activate a DnD setting resident at the GLMS for the user device. Once the DnD setting has been changed in the GLMS to a state of do-not-disturb, the GLMS stops all subsequent incoming talk session requests directed to the user's device. According to some standards this is accompanied by the GLMS sending a busy indication to the calling party.

In addition to DnD management the GLMS performs access list management. Access lists are used to specify who is permitted or not permitted to establish a PTT^{™} session with a specific user device. Both a reject list, and an accept list can be stored for a user device, so that calls from specific user devices on these lists are respectively rejected or accepted automatically.

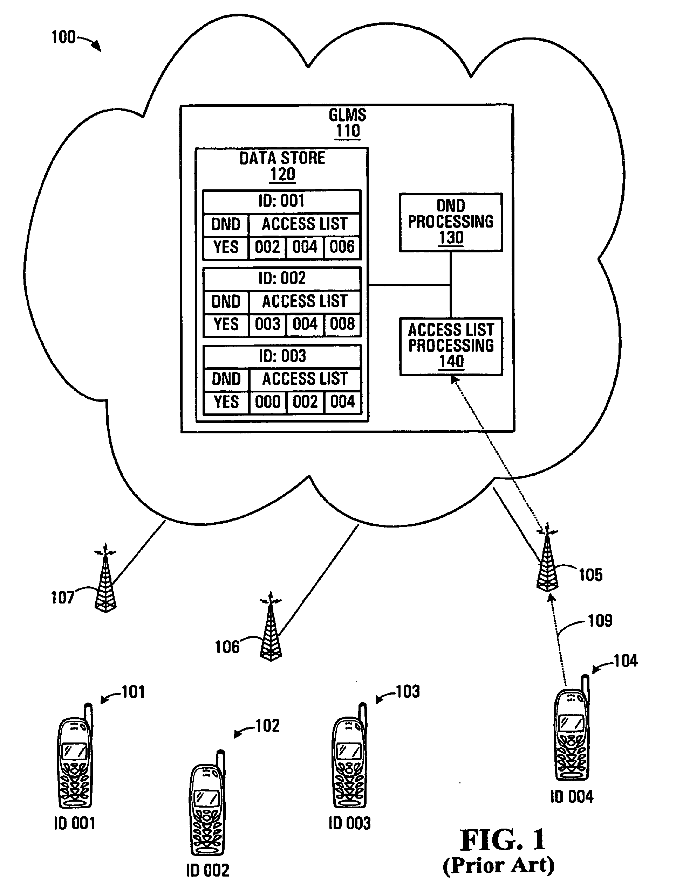

A standard system architecture in which wireless dispatch call management is performed is defined by the OMA (open mobile alliance) standard. Depicted in Figure 1 is an OMA compliant system which includes push-to-talk^{™} over cellular (PoC) services. The overall architecture of the known OMA compliant system is generally indicated by reference numeral 100, and includes a known GLMS (group list management server) 110 which manages groups and lists (e.g. contact and access lists) that are needed for the PoC service. Also shown are the BTSs (base transceiver stations) 105,106,107 through which users can access the system. The illustrated example shows four user devices 101,102,103,104 having respective identifiers (ID) 001,002,003, and 004.

The known GLMS 110 provides list management operations to create, modify, retrieve and delete groups and lists, and to provide storage therefor. Data store 120 provides storage for the known GLMS which includes access lists and DnD flags stored by user device. The data for the DnD flags and access lists are shown in respect of known user devices 101, 102, and 103 in association with IDs 001,002,003. The access list is provided for each known user device (101, 102, 103) and specifies which other known user devices are permitted to reach the respective known user device (101, 102, or 103) over PoC. For example, for user device 101 having ID 001, the access list contains 002,004,006, indicating that the devices having these Ids are allowed to reach the user device 101. The known GLMS 110 also stores for each known user device a DnD flag which may either be a "yes" or a "no" value which dictates whether or not the user device is in a state of do-not-disturb. Each user device's DnD flag and access list helps facilitate management of talk requests directed to that user device.

According to the OMA standard, the user device is permitted to query and set the value of the DnD flag of that user device, but generally is not permitted to directly query or set the value of a DnD flag of another user device.

Figure 1 depicts a known user device 104 with ID 004 which is sending a group talk request 109 for a session with other known user devices 101, 102, and 103, all of which are part of the group as defined by OMA. The talk request 109 is received and forwarded by the Radio Access Network (RAN) 105 to the known system 100. Once the request is forwarded to the known GLMS 110, DnD Processing 130 and Access List Processing 140 take place to determine if the talk request 109 is forwarded. Since each of the known user devices 101, 102, and 103, has an associated DnD flag of "YES" in the data store 120 of the known GLMS 110, none of the known user devices 101, 102, and 103, are forwarded the talk request 109 which would take place over RANs 106 and 107.

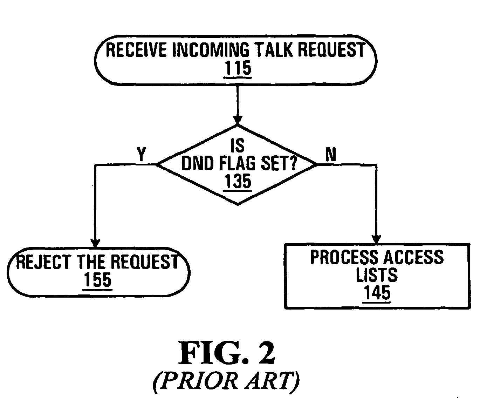

Figure 2 shows the steps performed by a known GLMS in a known OMA compliant system to manage incoming calls for a user device using the stored DnD flag and access list for that user device. At step 115, the known GLMS receives an incoming talk request specifying the user device as the device being called. In step 135 the known GLMS checks the DnD flag associated with the user device identified in the talk request. If the DnD flag is set to "NO" then processing of the call continues at step 145 wherein the access lists are processed to assess whether the talk request should be forwarded to the user device or not. If the DnD flag 130 is set to "YES" then the talk request is rejected in step 155, and the user's device is not disturbed.

WO02102040 discloses the processing of calls in a full duplex communications system. When a Call Administration Service 'CAS' is activated, a CAS processor routes an incoming call in accordance with subscriber provisioning information. A first step of routing an incoming call is to extract from the call a caller identifier such as a caller number or name. The call identifier is then compared to an access table established as part of the subscriber's provisioning information. If the extracted caller identifier matches an entry in the access table then the call is routed to the subscriber. Thus, the subscriber is able to pre-arrange for calls from predetermined callers to be routed to him/her whilst other calls from other callers are not routed based on the caller's identity whilst the CAS is activated.

### GENERAL

The present invention provides methods, systems, and devices for selective override of do-not-disturb in a wireless communications network, in which a user is provided with an option to query and modify the ignoring of do-not-disturb (DnD) for certain reasons associated with an incoming call. In some embodiments, the DnD is ignored when the incoming call is an urgent call. In other embodiments DnD is ignored when an incoming call is an emergency call. In some embodiments a network call processing server manages and performs selective override of do-not-disturb in an OMA compatible system. In yet other embodiments, a mobile device is adapted to send to a dispatch network of the wireless communications network a request to query or modify an ignoreDnD attribute, including an ignoreDnD flag, along with associated ignoreDnD reasons.

According to one broad aspect, the invention provides a method of talk request processing in a do-not-disturb (DnD) capable communication system, the method comprising: receiving a talk request for a requested communications session involving a user device capable of wallcie-talkie-like functionality; and selectively overriding DnD functionality for the requested communications session based on an ignoreDnD attribute for the user device applied to a criterion or condition of the talk request other than a user device identifier.

According to another broad aspect, the invention provides a talk request processing system in a do-not-disturb (DnD) capable communication system, the talk request processing system comprising: a receiver adapted to receive a talk request for a requested communications session involving a user device capable of wallcie-tallcie-like functionality; and a network call processing function adapted to selectively override DnD functionality for the requested communications session based on an ignoreDnD attribute for the user device applied to a criterion or condition of the talk request other than a user device identifier.

According to another broad aspect, the invention provides a user device capable of walkie-talkie-like functionality for a do-not-disturb (DnD) capable communication system, the user device comprising: a user interface adapted to accept an external input to modify an ignoreDnD attribute for the user device, the ignoreDnD attribute concerning a criterion or condition of a talk request other than a user device identifier such that based on said ignoreDnD attribute, DnD functionality for a communication session requested by the talk request is selectively overridden; and an ignoreDnD attribute request generator responsive to said external input adapted to send a network call processing server a request to update the ignoreDnD attribute of the user device.

According to yet another broad aspect, the invention provides a computer readable medium containing code means for execution by a processor of the system or device according to the invention for implementing the method according to the invention.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Preferred embodiments of the invention will now be described with reference to the accompanying diagrams, in which:
FIG. 1 is a block diagram depicting elements of a known communications system participating in services having do-not-disturb functionality;
FIG. 2 is a flow diagram illustrating the steps performed by a GLMS of a known communications system having do-not-disturb functionality in processing an incoming talk request to a user device;
FIG. 3 is a block diagram depicting elements of a modified communications system participating in modified services having modified do-not-disturb functionality according to an embodiment of the invention;
FIG. 4 is a flow diagram illustrating the steps performed by a modified communications system having modified do-not-disturb functionality for processing an incoming talk request to a user device according to another embodiment of the invention;
FIG. 5A is a block diagram representation of a datagram for a modified DnD attribute according to a further embodiment of the invention;
FIG. 5B is a block diagram representation of a datagram for a DnD flag and a datagram for a new ignoreDnD attribute according to yet another embodiment of the invention; and
FIG. 6 is a block representation of a modified user device incorporating elements according to an alternate embodiment of the invention.

### DESCRIPTION OF PREFERRED EMBODIMENTS

In certain circumstances, it would be desirable that an incoming call be forwarded to a particular user device even if that user device has its DnD flag set at a call processing server not to disturb the user. Such a situation may occur for example, in an emergency, or when the call is urgent or for any other reason the subscriber or user would deem that this should be the case. In such a situation, there is provided by various embodiments of the invention, methods, systems, and devices for ignoring the DnD flag under certain circumstances, and hence overriding the DnD flag, and for querying and modifying data stored for use in overriding the DnD flag.

The examples which follow employ PTT^{™} capable PoC networks and wireless devices. More generally embodiments described herein are applicable in the context of the network and wireless devices participating in walkie-talkie-like functionality, of which PTT^{™} is but one example.

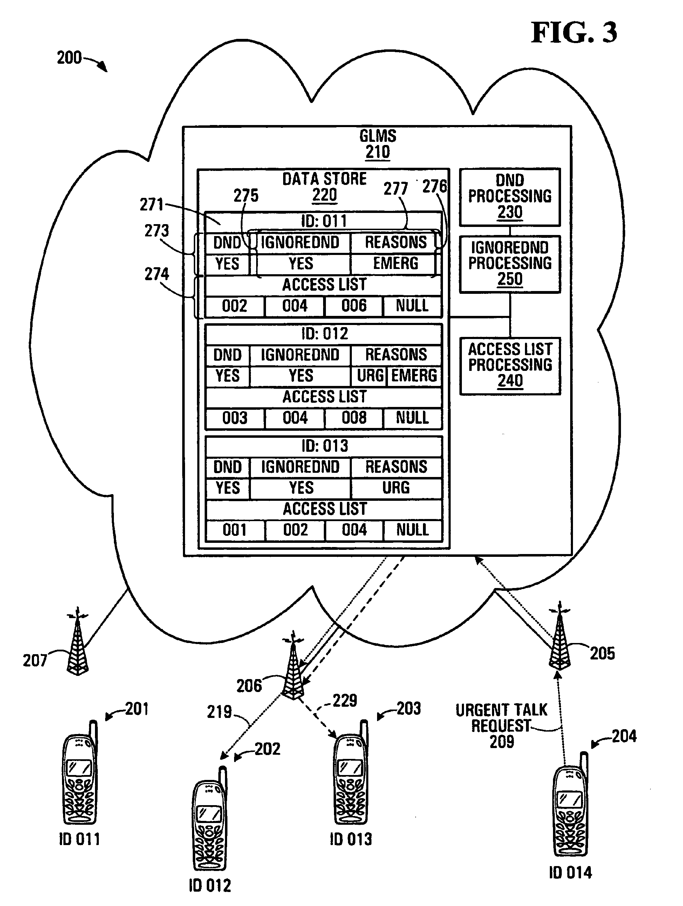

Referring to Figure 3, a modified OMA system implementing a modified OMA standard in which an example embodiment of the invention operates, will now be discussed.

The modified OMA system of Figure 3 provides a modified push-to-talk^{™} over cellular (PoC) service according to the example embodiment, and incorporates a new ignoreDnD flag in conjunction with a new ignore reason list of ignore reason values to determine whether or not, for any particular talk request, the DnD flag of the called device is to be ignored, and hence DnD functionality overridden.

With respect to structure, the specific modified system of Figure 3 generally indicated by reference numeral 200, includes a modified GLMS (group list management server) 210. The GLMS 210 is a specific example of a call processing server. The GLMS 210 includes a data store 220, an access list processing unit 240, an ignoreDnD processing unit 250, and a DnD processing unit 230. The data store 220, access list processing unit 240, ignoreDnD processing unit 250, and DnD processing unit 230 are coupled to each other for data exchange.

Other embodiments employ different elements of the system to perform similar functionality to that performed by the units 250, 240, 230, of the GLMS 210 of Figure 3. In some embodiments, each one of the GLMS 210 and the units 250, 240, 230, may be implemented in hardware, software, firmware, or any combination of hardware, software and firmware.

Also shown are three RANs (radio access networks) 205, 206, and 207 of the system coupled through the system 200 to the GLMS 210, and four user devices 201, 202, 203, and 204 having identifiers 011,012,013,014 respectively which may be actively coupled to the system via RANs 205, 206, and 207.

The example of Figure 3 shows DND processing unit 230, ignoreDnD processing unit 250 and access list processing unit 240 as separate elements. More generally, these may be implemented separately, or in combination, and may be implemented in hardware, software, firmware, or any combination of hardware, software and firmware. In a preferred embodiment, this functionality is included as software which is added to call processing functionality which would be conventionally provided in the GLMS 210. This new functionality may be provided on the GLMS 210 as shown in Figure 3, and/or may be implemented on a separate device or devices, in a distributed or consolidated manner. Alternative this functionality may be provided independent of the GLMS, such as would necessarily be the case in systems not having a GLMS.

The example of Figure 3 is particular to GLMS in an OMA context. However, OMA implementations are not limited to the example of Figure 3. Furthermore, while OMA is employed as the basis for the example of Figure 3, more generally, embodiments of the invention are applicable in any context in which DnD functionality (or DnD-like functionality) is being employed in networks providing a walkie-talkie-like function.

Also, the example of Figure 3 shows a network consisting of three RANs 205,206,207, and a GLMS 210. More generally, any appropriate network capable of providing walkie-talkie-like connectivity can be employed. This may employ greater or fewer than three RANs, or may employ different equipment altogether. Also, the example of Figure 3 shows four user devices 201,202,203,204. The actual number of users in a given system will typically be a transient characteristic. A greater or fewer number of users may be present at any given instant.

The data store 220 contains DnD flags and access lists in respect of user devices having identifiers 011, 012, and 013. By way of example, the data for the user device 201 having identifier 011 is indicated generally by 271. The device identifiers may be of any suitable form depending upon the system and network in which they are implemented. The access list, such as access list 274 for user device 201, is provided for each user device (201, 202, 203) and specifies which other users are permitted to reach the respective user device (201, 202, or 203) over PoC. The modified GLMS 210 also stores for each user device a DnD flag, such as DnD flag 273 for user device 201, which may either be a "YES" or a "NO". Other embodiments utilize a DnD flag 273 which is a logical boolean flag having two possible values; true and false. In further embodiments, the DnD flag 273 may be any form of data or data type which may have any number of possible values capable of representing the presence or absence of a do-not-disturb state, or equivalently the presence or absence of a "free-to-disturb" state. Additionally, the modified GLMS 210 stores an ignoreDnD flag for each user device, such as ignoreDND flag 275 for user device 011 (which may have a value of "YES" or "NO") and an ignore reason list 276 for each user device. The ignoreDnD flag 275 and the ignore reason list 276 together form an ignoreDnD attribute 277. In some embodiments the ignoreDnD flag 275 is a logical boolean flag having two possible values; true and false. In other embodiments, the ignoreDnD flag 275 may be any form of data or data type which may have any number of possible values, capable of representing whether or not the DnD flag (or other information) is to be ignored (overriden). The ignore reason list is for storing one or more reasons which a user may select to narrow down the circumstances in which the DnD flag is to be ignored. Examples of reasons are "urgent" and "emergency", but any suitable set of reasons may be allowed in a given system. Furthermore, in some embodiments, no ignore reasons list is employed at all. Rather ignoreDnD processing proceeds solely on the basis of the ignoreDnD flag. Each user device's DnD flag, ignoreDnD flag, ignore reason list, and access list helps facilitate management of talk requests directed to that user device.

In operation, the modified GLMS 210 manages groups and lists (e.g. contact and access lists) that are used for the modified PoC service. Specifically, the GLMS 210 provides list management operations to create, modify, retrieve and delete groups and lists, and to provide storage therefor. Data store 220 provides storage for the modified GLMS 210 including access lists 274, DnD flags 271, ignoreDnD flags 275, and ignore reason lists 276 by user device. The DnD processing unit 230 performs modified DND processing 230, the ignoreDnD processing unit 250 performs new ignoreDnD processing, and access list processing unit 240 performs access list processing.

As with the DnD flags of the standard OMA system, in the modified system depicted in Figure 3, a user is allowed to select the value of the ignoreDnD flag and the ignore reason list stored in the GLMS 110 for the user's device. This can be done by enhancing the current method that is used to update the access list in GLMS.

In some embodiments the user can also query the current values of the ignoreDnD flag and ignore reasons list.

In this embodiment the user is not permitted to query or set the value of the ignoreDnD flag or any value of the ignore reason list of any other user's device. In other embodiments, a class of special users such as administrators may be given permissions to query and/or modify the value of the ignoreDnD flag and the values in the ignore reason list of other user's devices.

RANs 205, 206, and 207 are for transmitting and receiving signals over channels between the network 200, and user devices. An example of a specific configuration is shown in Figure 3, in which at one moment in time user device 204 is in communication with RAN 205. RAN 206 is in communication with user devices 202 and 203. User device 201 is neither receiving nor transmitting to any particular RAN. Radio access network 207 is neither receiving nor transmitting any signals to any particular user device. It should be understood that the particular configuration of user devices and base transceiver stations represents a "snapshot" of a possible configuration of user devices in communication with the system 200, and in general at different times will have different numbers of user devices and different types of connections to different user devices depending upon what is happening within the network at that time.

In the specific call and talk request processing example shown in Figure 3, the user device 204 with ID 014 sends a group talk request as per the underlying PTT^{™} initiation protocol for a session with user devices 201, 202, and 203, all of which are part of the group. The talk request 209 is marked as "urgent" and is received and forwarded by RAN 205 to the modified system 200. The existing PTT^{™} initiation protocol can be enhanced to include a priority of each call request. Once the request is forwarded to the modified GLMS 210, ignoreDnD processing takes place in ignoreDnD processing unit 250, DnD processing takes place in DnD processing unit 230, and access list processing 240 take place to determine if the talk request 209 is to be forwarded.

In the illustrated example, each of the user devices 201, 202, and 203, have an associated DnD flag 273 of "YES" in the data store 220 of the GLMS 110. If all of the user devices had ignoreDnD flag 275 values of "NO", then none of the user devices 201, 202, and 203, would be forwarded the talk request 209.

In the example given in Figure 3, the ignoreDnD flag 275 of each of devices 201, 202, and 203 is set to "YES". User device 201 (ID 011) has one ignore reason value, namely "EMERG" for emergency, associated with it. User device 202 (ID 012) has two ignore reason values, namely "URG" for urgent, and "EMERG", associated with it. User device 203 (ID 013) has one ignore reason value, namely "URG", associated with it.

The user device requesting to talk has sent an "urgent" talk request, and hence only those user devices for which there is an ignore reason value of "urgent" will be forwarded the talk request. Any users whose DnD flag is not set will also be forwarded the talk request. As such only user devices 202 and 203 (having IDs 012 and 013) are forwarded respective talk requests 219 and 229 via RAN 206.

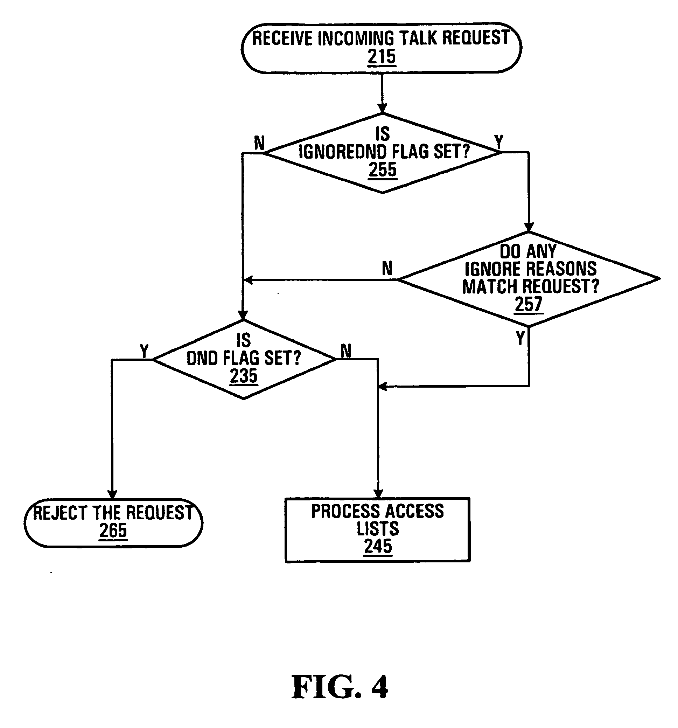

Figure 4 shows the steps performed by a modified call service management server in a modified communications system according to an example embodiment to manage incoming calls for a user device. A call processing function, for example a call processing server (CPS), manages the incoming calls with use of a new ignoreDnD flag, a new ignore reason list, and a stored DnD flag, and an access list for the user device.

At step 215, the network receives an incoming talk request specifying the user device as the target device which is being sent the talk request. In step 255 the modified GLMS checks the ignoreDnD flag associated with the target device.

If the ignoreDnD flag is set to "NO" then DnD functionality is not overridden and processing of the talk request continues at step 235 wherein the DnD flag is tested, and if the DnD flag is "YES", the talk request is rejected in step 265 and if the tested DnD flag is "NO", processing of the talk request continues to the step of processing access lists 245.

If the ignoreDnD flag is set to "YES" then processing of the talk request continues at step 257 wherein the ignore reason list is compared to a criterion or condition of the talk request. If any of the ignore reason values matches a criterion or condition of the talk request, processing of the talk request proceeds to the step of processing access lists 245, and the DnD functionality (step 235) is ignored and overridden. If none of the ignore reason values match the criteria of the talk request, the DnD functionality is not overridden, the DnD flag is tested at step 235, and if the DnD flag is "YES", the talk request is rejected in step 265 and if the DnD flag is "NO", processing of the talk request continues to the next step of processing access lists 245.

In some embodiments, the step 235 along with 265 and 245 collectively are responsible for DnD functionality. In some embodiments, the steps 255 and 257 collectively are responsible for ignoreDnD attribute processing.

It should be noted that although the particular embodiments depicted have utilized an ignoreDnD flag, in some embodiments, no ignoreDnD flag is used, and instead, the talk request processing proceeds directly from receiving the talk request at step 215 to comparing the ignore reason list of step 257. In such an embodiment, DnD functionality is ignored only if any one of the ignore reason values matches a current state of the talk request. If a user wishes always to ignore DnD functionality, the ignore reason list is set to contain every possible criteria of a talk request, and if the user wanted not to be disturbed by any call, the list would contain no possible status for any talk request.

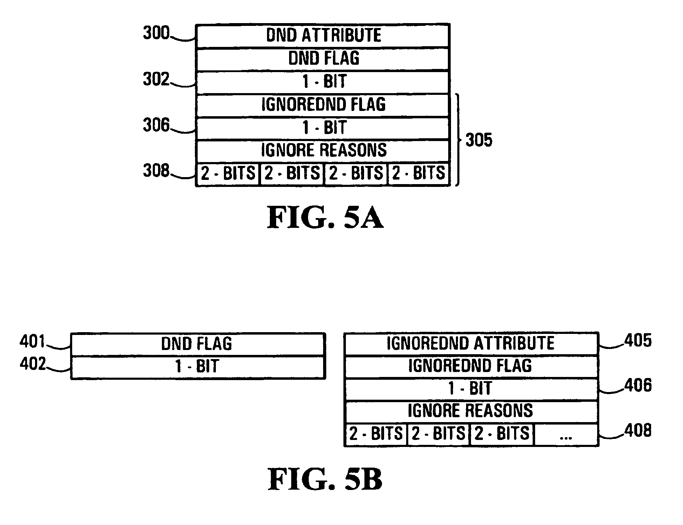

Referring to Figure 5A, a datagram depicting an example of a modified DnD Attribute 30 of a modified OMA system according to a preferred embodiment of the invention will now be described.

In this particular preferred embodiment the ignoreDnD flag 306 and ignore reason list 308 are incorporated into an ignoreDnD attribute 305 of a modified DnD attribute 300. The standard DnD flag 302 forms part of the DnD attribute 300 and its value is a 1-bit boolean 302. The ignoreDnD attribute 305 includes an ignoreDnD flag 306 which has as its value a 1-bit boolean, and an ignore reason list 308, which lists up to four possible reasons why the DnD should be ignored, each reason having as its value a 2-bit value. Each of these variables may be of longer or shorter bit-length depending upon the specific implementation. In some embodiments, there may be more than four ignore reasons and hence the bit-length would be longer than 2-bits. The example of Figure 5A shows headings "DnD attribute" etc. In an actual data store, these headings do not need to be stored as the location of contents is known.

In other embodiments, the DnD flag is always ignored if the incoming call is an emergency call, and hence the ignoreDnD flag would not be required, as long as the ignore reasons were always processed. Conversely, in such an embodiment, an ignoreDnD flag could be set to "YES" and no reason provided as long as the ignoreDnD is only set to "YES" for emergency calls, and if the method step 257 of determining if any ignore reasons match a criterion of the request is always skipped.

In some embodiments, any one 2-bit encoded reason may represent a state that the talk request must meet. In the particular preferred embodiment illustrated in Figure 5A, each of the 2-bit encoded reasons may be any one selected from the group of, 00 (Emergency), 01 (Urgent), 10 reservel, 11 reserve2. In this embodiment, the GLMS can be updated by a user at any time as part of a user's change of profile. These reasons are not encoded in the PTT^{™} request itself, only the PTT^{™} call type (for example an emergency call or an urgent call) is encoded in the PTT^{™} request. The existing protocol can be enhanced to include the call type in the call request and ignore DnD reason in the user change request.

Referring to Figure 5B, datagrams depicting a standard DnD flag 401 which has a single 1-bit boolean value 402, and a new ignoreDnD attribute 405 according to a second preferred embodiment of the invention will now be described.

In this second preferred embodiment an ignoreDnD flag 406 and an ignore reason list 408 are incorporated into a new ignoreDnD attribute 405. The standard DnD flag 401 is separate from the ignoreDnD attribute 405 and its value is a 1-bit boolean 402. The ignoreDnD flag has its value a 1-bit boolean 408. Each entry in the ignore reason list 408, which lists possible reasons why the DnD should be ignored, is a 2-bit value 408.

In some embodiments, any one 2-bit encoded reason may represent a state or criterion that the talk request must meet. For example, the 2-bit reason could represent a 2-bit state flag accompanying the talk request or a 2-bit state flag rendered in response to receipt of the talk request to reflect the state of the talk request. In the particular preferred embodiment illustrated in Figure 5A, each of the 2-bit encoded reasons may be any one selected from the group of, 00 (Emergency), 01 (Urgent), 10 reserve, and 11 reserve, and any talk request may, but not necessarily, be characterized as being an emergency request (00), an urgent request (01), or neither.

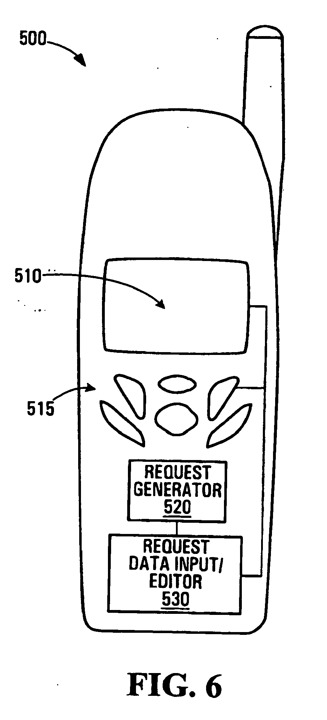

Referring now to Figure 6, a modified user device in the form of a wireless mobile device generally indicated by reference number 500 according to a specific embodiment of the invention, will now be discussed.

In this embodiment, to provide a user of the user device the ability to query and set the new ignoreDnD and ignore reason values, new functionality is incorporated in the user device 500 itself. In this embodiment a user would make a selection using any suitable form of user interface (UI) which could be, for example, but not limited to, keys 515, touch screen capability of a user interface (UI) display screen 510, or a voice command responsive interface, to select, query or modify a value for one of the ignoreDnD flag, or ignore reason values. In response to the user selecting this function from the interface modified by new functionality for request data input editor 530, the user interface displays choices of which of the new variables to change and provides functionality for editing them in accordance with the possible range of values each may have. Once the user has finished editing the query request or modify setting request, the new request generator 520 is adapted to send a request to query and/or modify settings of the new variables in the network, for example in the GLMS. In a preferred embodiment, the request generator, and the request data input/editor are implemented as additions/modifications to software running on the device 500. Alternatively separate hardware and/or software and/or firmware may be used. The existing protocol can be enhanced for users to change their DnD setting profiles.

Although the specific embodiments presented herein are in respect of PoC versions of PTT^{™}, any voice communications system which uses do-not-disturb functionality could be adapted in accordance with the invention to provide functionality to ignore the do-not-disturb state in certain circumstances.

It should be understood that although the specific embodiments presented herein are in accordance with an adapted OMA system and standard, that other communications systems and standards for example but not limited to GSM, TDMA, and CDMA, could be adapted according to the invention to provide functionality to ignore or bypass do-not-disturb functionality in certain circumstances or for certain talk requests.

In other embodiments, the method and system are adapted to provide peripheral support for a wired device which is capable of participating in wireless sessions with various talkgroups, and which has an associated ignoreDnD attribute and services provided therefor. Such a wired device participates via a network interworking function, so that although the wired device is not within the wireless network, it appears as though it is, and participates in a group call like a wireless device. Hence, according to these embodiments, the wired user device is provided with services to enable query and modifications to the ignoreDnD attribute so that DnD may be overridden. For these embodiments, talk request processing along with do-not-disturb functionality occurs in a manner analogous to the manner described hereinabove.

The preferred embodiment of the invention as described with respect to figures 3 to 6 is presented by way of example and is not limitative of the scope of the present invention defined by the appended claims.

## Claims

1. A method of talk request processing in a do-not-disturb abbreviated as DnD capable communication system (200), the method comprising:
receiving a talk request (215) for a requested communications session involving a user device (201, 202, 203, 204, 500) capable of wallcie-talkie-like functionality; and
selectively overriding DnD functionality (255, 235, 257) for the requested communications session based on an ignoreDnD attribute (277, 305, 405) for the user device (201, 202, 203, 204, 500) applied to a criterion or condition of the talk request other than a user device identifier.

2. The method of claim 1 further comprising:
for said user device (201, 202, 203, 204, 500) associating therewith an access list (274) specifying which other user devices are permitted to reach said user device;
on overriding said DnD functionality, processing the access list (274) to assess whether the talk request should be forwarded to the user device (201, 202, 203, 204, 500) or not.

3. A method according to claim 1 or claim 2 wherein the user device (201, 202, 203, 204, 500) is a wireless device.

4. A method according to any one of claims 1 to 3 wherein the ignoreDnD attribute (277, 305, 405) comprises an ignoreDnD flag (275, 306, 406), and wherein selectively overriding said DnD functionality (255, 235, 257) is a function of the ignoreDnD flag (275, 306, 406).

5. A method according to any one of claims 1 to 4 wherein the ignoreDnD attribute (277, 305, 405) comprises at least one predetermined ignore reason value (276, 308, 408), and wherein selectively overriding said DnD functionality (255, 235, 257) is a function of the at least one predetermined ignore reason value (276, 308, 408).

6. A method according to claim 5, wherein the talk request (209, 219, 229) has a current state associated therewith, the current state being one of a number of possible current states for the talk request (209, 219, 229), wherein each predetermined ignore reason value (276, 308, 408) represents a corresponding possible current state for the talk request (209, 219, 229), the method further comprising:
evaluating the ignoreDnD flag (255) to determine whether further ignoreDnD processing is to be performed, and if evaluating the ignoreDnD flag (255) determines that further ignoreDnD processing is to be performed:
determining the current state of the talk request (209, 219, 229); and
for each of the at least one predetermined ignore reason value (276, 308, 408) comparing (257) the corresponding possible current state with the current state of the talk request (209, 219, 229);
wherein said DnD functionality is overridden if any corresponding possible current state matches the current state of the talk request (209, 219, 229).

7. A method according to claim 6 wherein each possible current state of the number of possible current states for the talk request (209, 219, 229) is a priority state of the talk request (209, 219, 229) at the time it was received.

8. A method according to one of claims 6 or 7 wherein the number of possible current states for the talk request (209, 219, 229) comprise at least one of "urgent" and "emergency".

9. A method according to any one of claims 1 to 8 further comprising maintaining the ignoreDnD attribute (277, 305, 405) for a plurality of user devices (201, 202, 203, 204, 500) as a function of inputs received from the user devices (201, 202, 203, 204, 500).

10. A talk request processing system in a do-not-disturb abbreviated as DnD capable communication system (200), the talk request processing system comprising:
a receiver (205, 206, 207) adapted to receive a talk request (209, 219, 229) for a requested communications session involving a user device (201, 202, 203, 204, 500) capable of wallcie-talkie-like functionality; and
a network call processing function (250, 220, 230) adapted to selectively override DnD functionality for the requested communications session based on an ignoreDnD attribute (277, 305, 405) for the user device (201, 202, 203, 204, 500) applied to a criterion or condition of the talk request other than a user device identifier.

11. The talk request processing system of claim 10 wherein the network call processing function is further adapted to:
for said user device (201, 202, 203, 204, 500) associate therewith an access list (274) specifying which other user devices are permitted to reach said user device;
on overriding said DnD functionality, process the access list (274) to assess whether the talk request should be forwarded to the user device (201, 202, 203, 204, 500) or not.

12. A talk request processing system according to claim 10 or claim 11 wherein the user device (201, 202, 203, 204, 500) is a wireless device.

13. A talk request processing system according to one of claims 10 to 12 wherein the network call function (250, 220, 230) comprises:
a data store (220) adapted to store the ignoreDnD attribute (277, 305, 405) for the user device (201, 202, 203, 204, 500);
a DnD processing function (230) adapted to provide DnD functionality; and
an ignoreDnD processing function (250) adapted to override DnD functionality for the requested communications session as a function of the ignoreDnD attribute (277, 305, 405) stored in the data store (220) for the user device (201, 202, 203, 204, 500).

14. A talk request processing system according to claim 13 wherein the ignoreDnD attribute (277, 305, 405) comprises an ignoreDnD flag (275, 306, 406) and at least one predetermined ignore reason value (276, 308, 408), and wherein the ignoreDnD processing function (250) selectively overrides said DnD functionality as a function of the ignoreDnD flag (275, 306, 406) and the at least one predetermined ignore reason value (276, 308, 408).

15. A talk request processing system according to claim 14 wherein the talk request (209, 219, 229) has a current state associated therewith, the current state being one of a number of possible current states for the talk request (209, 219, 229), wherein each predetermined ignore reason value represents a corresponding possible current state for the talk request (209, 219, 229), wherein the ignoreDnD processing function (250):
retrieves the ignoreDnD attribute (277, 305, 405) from the data store (220); and
evaluates the ignoreDnD flag (275, 306, 406) to determine whether further ignoreDnD processing (255) is to be performed, and if evaluating the ignoreDnD flag (275, 306, 406) determines that further ignoreDnD processing (255) is to be performed:
determines the current state of the talk request (209, 219, 229); and
for each of the at least one predetermined ignore reason value (276, 308, 408) compares (257) the corresponding possible current state with the current state of the talk request (209, 219, 229);
wherein said DnD functionality is overridden if any corresponding possible current state matches the current state of the talk request (209, 219, 229).

16. A talk request processing system according to claim 15 wherein each possible current state of the number of possible current states for the talk request (209, 219, 229) is a priority state of the talk request (209, 219, 229) at the time it was received.

17. A talk request processing system according to one of claims 15 or 16
wherein the number of possible current states for the talk request (209, 219, 229) comprise at least one of "urgent" and "emergency".

18. A talk request processing system according to any one of claims 10 to 17 further adapted to maintain the ignoreDnD attribute (277, 305, 405) for each of a plurality of user devices (201, 202, 203, 204, 500) or as a function of inputs from the user devices (201, 202, 203, 204, 500).

19. A user device (201, 202, 203, 204, 500) capable of waude-talide-like functionality for a do-not-disturb abbreviated as DnD capable communication system (200), the user device (201, 202, 203, 204, 500) comprising:
a user interface (515, 530) adapted to accept an external input to modify an ignoreDnD attribute (277, 305, 405) for the user device, the ignoreDnD attribute concerning a criterion or condition of a talk request other than a user device identifier such that based on said ignoreDnD attribute, DnD functionality for a communication session requested by the talk request is selectively overridden; and
an ignoreDnD attribute request generator (520) responsive to said external input adapted to send a network call processing server (210) a request to update the ignoreDnD attribute (277, 305, 405) of the user device (201, 202, 203, 204, 500).

20. A user device (201, 202, 203, 204, 500) according to claim 19 wherein the user device (201, 202, 203, 204, 500) is a wireless device.

21. A user device (201, 202, 203, 204, 500) according to one of claims 19 or 20 further comprising:
a user interface display (510) for displaying modifications for the ignoreDnD attribute (277, 305, 405) indicated by the external input, wherein the user interface (515) is further adapted to accept an external query input to retrieve an ignoreDnD attribute (277, 305, 405) for the user device (201, 202, 203, 204, 500), the ignoreDnD attribute request generator (520) is further adapted to:
(a) send a network call processing server (210) a query to retrieve the ignoreDnD attribute (277, 305, 405) of the user device (201, 202, 203, 204, 500); and
b) receive a response to said query from the network (200);
wherein the user interface display (510) is adapted to, in response to the ignoreDnD attribute request generator (520) receiving the response to said query, display the ignoreDnD attribute (277, 305, 405) for the user device (201, 202, 203, 204, 500).

22. A computer readable medium containing code means for execution by a processor of the system of any of claims 10 to 18 or the device of any of claims 19 to 21 for implementing the method of any of claims 1 to 9.

## Patentansprüche

1. Verfahren einer Gesprächsaufforderungsverarbeitung in einem do-not-disturb-, abgekürzt als DnD-, fähigen Kommunikationssystem (200), wobei das Verfahren Folgendes umfasst:
Empfangen einer Gesprächsaufforderung (215) für eine angeforderte Kommunikationssitzung, die eine zu einer Walkie-Talkie-ähnlichen Funktion fähige Benutzervorrichtung (201, 202, 203, 204, 500) einschließt; und
selektives Nichtberücksichtigen einer DnD-Funktion (255, 235, 257) für die angeforderte Kommunikationssitzung basierend auf einem ignoreDnD-Attribut (277, 305, 405) für die Benutzervorrichtung (201, 202, 203, 204, 500), das auf ein anderes Kriterium oder einen anderen Zustand der Gesprächsaufforderung als einen Benutzervorrichtungskennzeichner angewendet wird.

2. Verfahren nach Anspruch 1, das des Weiteren Folgendes umfasst:
für die Benutzervorrichtung (201, 202, 203, 204, 500) Verbindung einer Zugriffsliste (274) damit, die bestimmt, welche anderen Benutzervorrichtungen die Benutzervorrichtung erreichen dürfen;
beim Nichtberücksichtigen der DnD-Funktion Verarbeiten der Zugriffsliste (274), um festzustellen, ob die Gesprächsaufforderung an die Benutzervorrichtung (201, 202, 203, 204, 500) weitergeleitet werden sollte oder nicht.

3. Verfahren nach Anspruch 1 oder Anspruch 2, wobei die Benutzervorrichtung (201, 202, 203, 204, 500) eine drahtlose Vorrichtung ist.

4. Verfahren nach einem der Ansprüche 1 bis 3, wobei das ignoreDnD-Attribut (277, 305, 405) einen ignoreDnD-Merker (275, 306, 406) umfasst und wobei das selektive Nichtberücksichtigen der DnD-Funktion (255, 235, 257) eine Funktion des ignoreDnD-Merkers (275, 306, 406) ist.

5. Verfahren nach einem der Ansprüche 1 bis 4, wobei das ignoreDnD-Attribut (277, 305, 405) mindestens einen vorher festgelegten Grund-ignorieren-Wert (276, 308, 408) umfasst und wobei das selektive Nichtberücksichtigen der DnD-Funktion (255, 235, 257) eine Funktion des mindestens einen vorher festgelegten Grund-ignorieren-Werts (276, 308, 408) ist.

6. Verfahren nach Anspruch 5, wobei die Gesprächsaufforderung (209, 219, 229) einen momentanen damit verbundenen Status aufweist, wobei der momentane Status einer einer Zahl möglicher momentaner Status für die Gesprächsaufforderung (209, 219, 229) ist, wobei jeder vorher festgelegte Grund-ignorieren-Wert (276, 308, 408) einen entsprechenden möglichen momentanen Status für die Gesprächsaufforderung (209, 219, 229) darstellt, wobei das Verfahren des Weiteren Folgendes umfasst:
Bewerten des ignoreDnD-Merkers (255), um zu ermitteln, ob eine weitere ignoreDnD-Verarbeitung durchzuführen ist, und falls das Bewerten des ignoreDnD-Merkers (255) ermittelt, dass eine weitere ignoreDnD-Verarbeitung (225) durchzuführen ist:
Ermitteln des momentanen Status der Gesprächsaufforderung (209, 219, 229); und
für jeden des mindestens einen vorher festgelegten Grund-ignorieren-Werts (276, 308, 408) Vergleichen (257) des entsprechenden möglichen momentanen Status mit dem momentanen Status der Gesprächsaufforderung (209, 219, 229);
wobei die DnD-Funktion nicht berücksichtigt wird, falls ein entsprechender möglicher momentaner Status mit dem momentanen Status der Gesprächsaufforderung (209, 219, 229) übereinstimmt.

7. Verfahren nach Anspruch 6, wobei jeder mögliche momentane Status der Zahl möglicher momentaner Status für die Gesprächsaufforderung (209, 219, 229) ein Prioritätsstatus der Gesprächsaufforderung (209, 219, 229) zu dem Zeitpunkt ist, zu dem sie empfangen wurde.

8. Verfahren nach einem der Ansprüche 6 oder 7, wobei die Zahl möglicher momentaner Status für die Gesprächsaufforderung (209, 219, 229) mindestens einen der folgenden umfasst: "dringend" und "Notruf".

9. Verfahren nach einem der Ansprüche 1 bis 8, das des Weiteren das Beibehalten des ignoreDnD-Attributs (277, 305, 405) für eine Vielzahl von Benutzervorrichtungen (201, 202, 203, 204, 500) als Funktion von von den Benutzervorrichtungen (201, 202, 203, 204, 500) her empfangenen Eingaben umfasst.

10. Gesprächsaufforderungsverarbeitungssystem in einem do-not-disturb-, abgekürzt als DnD-, fähigen Kommunikationssystem (200), wobei das Gesprächsaufforderungsverarbeitungssystem Folgendes umfasst:
einen Empfänger (205, 206, 207), der zum Empfangen einer Gesprächsaufforderung (209, 219, 229) für eine angeforderte Kommunikationssitzung angepasst ist, die eine zu einer Walkie-Talkie-ähnlichen Funktion fähige Benutzervorrichtung (201, 202, 203, 204, 500) einschließt; und
eine Netzanrufverarbeitungsfunktion (250, 220, 230), die für das selektive Nichtberücksichtigen der DnD-Funktion für die angeforderte Kommunikationssitzung basierend auf einem ignoreDnD-Attribut (277, 305, 405) für die Benutzervorrichtung (201, 202, 203, 204, 500) angepasst ist, das auf ein anderes Kriterium oder einen anderen Zustand der Gesprächsaufforderung als einen Benutzervorrichtungskennzeichner angewendet wird.

11. Gesprächsaufforderungsverarbeitungssystem nach Anspruch 10, wobei die Netzanrufverarbeitungsfunktion des Weiteren für Folgendes angepasst ist:
für die Benutzervorrichtung (201, 202, 203, 204, 500) Verbindung einer Zugriffsliste (274) damit, die bestimmt, welche anderen Benutzervorrichtungen die Benutzervorrichtung erreichen dürfen;
beim Nichtberücksichtigen der DnD-Funktion Verarbeiten der Zugriffsliste (274), um festzustellen, ob die Gesprächsaufforderung an die Benutzervorrichtung (201, 202, 203, 204, 500) weitergeleitet werden sollte oder nicht.

12. Gesprächsaufforderungsverarbeitungssystem nach Anspruch 10 oder Anspruch 11, wobei die Benutzervorrichtung (201, 202, 203, 204, 500) eine drahtlose Vorrichtung ist.

13. Gesprächsaufforderungsverarbeitungssystem nach einem der Ansprüche 10 bis 12, wobei die Netzanruffunktion (250, 220, 230) Folgendes umfasst:
einen Datenspeicher (220), der zum Speichern des ignoreDnD-Attributs (277, 305, 405) für die Benutzervorrichtung (201, 202, 203, 204, 500) angepasst ist;
eine DnD-Verarbeitungsfunktion (230), die zum Bereitstellen der DnD-Funktion angepasst ist; und
eine ignoreDnD-Verarbeitungsfunktion (250), die zum Nichtberücksichtigen der DnD-Funktion für die geforderte Kommunikationssitzung als Funktion des ignoreDnD-Attributs (277, 305, 405) angepasst ist, welches in dem Datenspeicher (220) für die Benutzervorrichtung (201, 202, 203, 204, 500) gespeichert ist.

14. Gesprächsaufforderungsverarbeitungssystem nach Anspruch 13, wobei das ignoreDnD-Attribut (277, 305, 405) einen ignoreDnD-Merker (275, 306, 406) und mindestens einen vorher festgelegten Grund-ignorieren-Wert (276, 308, 408) umfasst und wobei die ignoreDnD-Verarbeitungsfunktion (250) die DnD-Funktion als eine Funktion des ignoreDnD-Merkers (275, 306, 406) und mindestens des einen vorher festgelegten Grund-ignorieren-Werts (276, 308, 408) selektiv nicht berücksichtigt.

15. Gesprächsaufforderungsverarbeitungssystem nach Anspruch 14, wobei die Gesprächsaufforderung (209, 219, 229) einen momentan damit verbundenen Status aufweist, wobei der momentane Status einer einer Zahl möglicher momentaner Status für die Gesprächsaufforderung (209, 219, 229) ist, wobei jeder vorher festgelegte Grund-ignorieren-Wert einen entsprechenden möglichen momentanen Status für die Gesprächsaufforderung (209, 219, 229) darstellt, wobei die ignoreDnD-Verarbeitungsfunktion (250) Folgendes umfasst:
ruft das ignoreDnD-Attribut (277, 305, 405) aus dem Datenspeicher (220) ab; und
bewertet den ignoreDnD-Merker (275, 306, 406), um zu ermitteln, ob eine weitere ignoreDnD-Verarbeitung (255) durchzuführen ist, und falls das Bewerten des ignoreDnD-Merkers (275, 306, 406) ermittelt, dass eine weitere ignoreDnD-Verarbeitung (255) durchzuführen ist:
ermittelt den momentanen Status der Gesprächsaufforderung (209, 219, 229); und
vergleicht (257) für jeden mindestens des einen vorher festgelegten Grund-ignorieren-Werts (276, 308, 408) den entsprechenden möglichen momentanen Status mit dem momentanen Status der Gesprächsaufforderung (209, 219, 229);
wobei die DnD-Funktion nicht berücksichtigt wird, falls irgendein entsprechender möglicher momentaner Status mit dem momentanen Status der Gesprächsaufforderung (209, 219, 229) übereinstimmt.

16. Gesprächsaufforderungsverarbeitungssystem nach Anspruch 15, wobei jeder mögliche momentane Status der Zahl möglicher momentaner Zustände für die Gesprächsaufforderung (209, 219, 229) ein Prioritätsstatus der Gesprächsaufforderung (209, 219, 229) zu dem Zeitpunkt ist, zu dem sie empfangen wurde.

17. Gesprächsaufforderungsverarbeitungssystem nach einem der Ansprüche 15 oder 16, wobei die Zahl möglicher momentaner Status für die Gesprächsaufforderung (209, 219, 229) mindestens einen der folgenden umfasst: "dringend" und "Notruf".

18. Gesprächsaufforderungsverarbeitungssystem nach einem der Ansprüche 10 bis 17, das des Weiteren zum Beibehalten des ignoreDnD-Attributs (277, 305, 405) für jede einer Vielzahl von Benutzervorrichtungen (201, 202, 203, 204, 500) oder als Funktion von von den Benutzervorrichtungen (201, 202, 203, 204, 500) her empfangenen Eingaben angepasst ist.

19. Benutzervorrichtung (201, 202, 203, 204, 500), die zu einer Walkie-Talkie-ähnlichen Funktion für ein do-not-disturb-, abgekürzt als DnD-, fähiges Kommunikationssystem (200) fähig ist, wobei die Benutzervorrichtung (201, 202, 203, 204, 500) Folgendes umfasst:
eine Benutzerschnittstelle (515, 530), die zum Akzeptieren einer externen Eingabe zum Modifizieren eines ignoreDnD-Attributs (277, 305, 405) für die Benutzervorrichtung angepasst ist, wobei das ignoreDnD-Attribut ein anderes Kriterium oder einen anderen Zustand einer Gesprächsaufforderung als einen Benutzervorrichtungskennzeichner so betrifft, dass die DnD-Funktion für eine durch die Gesprächsaufforderung angeforderte Kommunikationssitzung basierend auf dem ignoreDnD-Attribut selektiv nicht berücksichtigt wird; und
einen ignoreDnD-Attribut-Aufforderungsgenerator (520), der auf die externe Eingabe reagiert und der zum Senden einer Aufforderung an einen Netzanrufverarbeitungsserver (210) zum Aktualisieren des ignoreDnD-Attributs (277, 305, 405) der Benutzervorrichtung (201, 202, 203, 204, 500) angepasst ist.

20. Benutzervorrichtung (201, 202, 203, 204, 500) nach Anspruch 19, wobei die Benutzervorrichtung (201, 202, 203, 204, 500) eine drahtlose Vorrichtung ist.

21. Benutzervorrichtung (201, 202, 203, 204, 500) nach einem der Ansprüche 19 oder 20, die des Weiteren Folgendes umfasst:
eine Benutzerschnittstellenanzeige (510) zum Anzeigen von Modifizierungen für das ignoreDnD-Attribut (277, 305, 405), das von der externen Eingabe angezeigt wird, wobei die Benutzerschnittstelle (515) des Weiteren zum Akzeptieren einer externen Abfrageeingabe zum Abfragen eines ignoreDnD-Attributs (277, 305, 405) für die Benutzervorrichtung (201, 202, 203, 204, 500) angepasst ist, wobei der ignoreDnD-Attribut-Aufforderungsgenerator (520) des Weiteren für Folgendes angepasst ist:
(a) Senden einer Abfrage an einen Netzanrufverarbeitungsserver (210) zum Abfragen des ignoreDnD-Attributs (277, 305, 405) der Benutzervorrichtung (201, 202, 203, 204, 500); und
b) Empfangen einer Antwort auf die Abfrage von dem Netz (200) her;
wobei die Benutzerschnittstellenanzeige (510) zum Anzeigen des ignoreDnD-Attributs (277, 305, 405) für die Benutzervorrichtung (201, 202, 203, 204, 500) als Antwort darauf, dass der ignoreDnD-Attribut-Aufforderungsgenerator (520) die Antwort auf die Abfrage empfängt, angepasst ist.

22. Computerlesbares Medium, das Codemittel zur Ausführung durch einen Prozessor des Systems nach einem der Ansprüche 10 bis 18 oder die Vorrichtung nach einem der Ansprüche 19 bis 21 zur Durchführung des Verfahrens nach einem der Ansprüche 1 bis 9 enthält.

## Revendications

1. Procédé de traitement de demandes de discussion dans un système de communication disposant d'une fonctionnalité ne pas déranger (200), abrégé par NpD, le procédé comprenant :
la réception d'une demande de discussion (215) pour une session de communication demandée impliquant un dispositif utilisateur (201, 202, 203, 204, 500) disposant d'une fonctionnalité de type émetteur-récepteur portatif; et
l'annulation sélective de la fonctionnalité NpD (255, 235, 257) pour la session de communication demandée, en fonction d'un attribut ignorer NpD (277, 305, 405) pour le dispositif utilisateur (201, 202, 203, 204, 500) appliqué à un critère ou à une condition de la demande de discussion autre que l'identifiant du dispositif utilisateur.

2. Procédé selon la revendication 1, comprenant en outre :
pour ledit dispositif utilisateur (201, 202, 203, 204, 500), l'association à celui-ci d'une liste d'accès (274) précisant quels autres dispositifs utilisateurs sont autorisés à atteindre ledit dispositif utilisateur ;
lors de l'annulation de ladite fonctionnalité NpD, traiter la liste d'accès (274) afin d'évaluer si la demande de discussion devrait ou non être transférée au dispositif utilisateur (201, 202, 203, 204, 500).

3. Procédé selon la revendication 1 ou la revendication 2, dans lequel le dispositif utilisateur (201, 202, 203, 204, 500) est un dispositif sans fil.

4. Procédé selon l'une quelconque des revendications 1 à 3, dans lequel l'attribut ignorer NpD (277, 305, 405) comprend un drapeau ignorer NpD (275, 306, 406) et dans lequel l'annulation sélective de ladite fonctionnalité NpD (255, 235, 257) est une fonction du drapeau ignorer NpD (275, 306, 406).

5. Procédé selon l'une quelconque des revendications 1 à 4, dans lequel l'attribut ignorer NpD (277, 305, 405) comprend au moins une valeur prédéterminée ignorer la raison (276, 308, 408) et dans lequel l'annulation sélective de ladite fonctionnalité NpD (255, 235, 257) est une fonction de la au moins une valeur prédéterminée ignorer la raison (276, 308, 408).

6. Procédé selon la revendication 5, dans lequel la demande de discussion (209, 219, 229) a un état actuel associé, l'état actuel étant l'un d'un certain nombre d'états actuels possibles pour la demande de discussion (209, 219, 229), dans lequel chaque valeur prédéterminée ignorer la raison (276, 308, 408) représente un état actuel possible correspondant pour la demande de discussion (209, 219, 229), le procédé comprenant en outre :
l'évaluation du drapeau ignorer NpD (255) pour déterminer si un traitement ignorer NpD supplémentaire doit être effectué, et si l'évaluation du drapeau ignorer NpD (255) détermine qu'un traitement ignorer NpD supplémentaire doit être effectué :
la détermination de l'état actuel de la demande de discussion (209, 219, 229) ; et
pour chacune de la au moins une valeur prédéterminée ignorer la raison (276, 308, 408), la comparaison (257) de l'état actuel possible correspondant avec l'état actuel de la demande de discussion (209, 219, 229) ;
dans lequel ladite fonctionnalité NpD est annulée si un quelconque état actuel possible correspondant correspond à l'état actuel de la demande de discussion (209, 219, 229).

7. Procédé selon la revendication 6, dans lequel chaque état actuel possible du nombre d'états actuels possibles pour la demande de discussion (209, 219, 229) est un état prioritaire de la demande de discussion (209, 219, 229) au moment où elle est reçue.

8. Procédé selon l'une des revendications 6 ou 7, dans lequel le nombre d'états actuels possibles pour la demande de discussion (209, 219, 229) comprend au moins un état parmi « urgent » et « urgence ».

9. Procédé selon l'une quelconque des revendications 1 à 8, comprenant en outre le maintien de l'attribut ignorer NpD (277, 305, 405) pour une pluralité de dispositifs utilisateurs (201, 202, 203, 204, 500) en fonction d'entrées reçues des dispositifs utilisateurs (201, 202, 203, 204, 500).

10. Système de traitement de demandes de discussion dans un système de communication disposant d'une fonctionnalité ne pas déranger (200), abrégé par NpD, le système de traitement de demandes de discussion comprenant :
un récepteur (205, 206, 207) conçu pour recevoir une demande de discussion (209, 219, 229) pour une session de communication demandée impliquant un dispositif utilisateur (201, 202, 203, 204, 500) disposant d'une fonctionnalité de type émetteur-récepteur portatif; et
une fonction de traitement d'appel de réseau (250, 220, 230) conçue pour annuler de manière sélective la fonctionnalité NpD pour la session de communication demandée, en fonction d'un attribut ignorer NpD (277, 305, 405) pour le dispositif utilisateur (201, 202, 203, 204, 500) appliqué à un critère ou à une condition de la demande de discussion autre que l'identifiant du dispositif utilisateur.

11. Système de traitement de demandes de discussion selon la revendication 10, dans lequel la fonction de traitement d'appel de réseau est en outre conçue pour :
pour ledit dispositif utilisateur (201, 202, 203, 204, 500), l'association à celui-ci d'une liste d'accès (274) précisant quels autres dispositifs utilisateurs sont autorisés à atteindre ledit dispositif utilisateur ;
lors de l'annulation de ladite fonctionnalité NpD, traiter la liste d'accès (274) afin d'évaluer si la demande de discussion devrait ou non être transférée au dispositif utilisateur (201, 202, 203, 204, 500).

12. Système de traitement de demandes de discussion selon la revendication 10 ou la revendication 11, dans lequel le dispositif utilisateur (201, 202, 203, 204, 500) est un dispositif sans fil.

13. Système de traitement de demandes de discussion selon l'une des revendications 10 à 12, dans lequel la fonction d'appel de réseau (250, 220, 230) comprend :
une mémoire de données (220) conçue pour mémoriser l'attribut ignorer NpD (277, 305, 405) pour le dispositif utilisateur (201, 202, 203, 204, 500) ;
une fonction de traitement NpD (230) conçue pour fournir la fonctionnalité NpD ; et
une fonction de traitement ignorer NpD (250) conçue pour annuler la fonctionnalité NpD pour la session de communication demandée en fonction de l'attribut ignorer NpD (277, 305, 305) mémorisé dans la mémoire de données (220) pour le dispositif utilisateur (201, 202, 203, 204, 500).

14. Système de traitement de demandes de discussion selon la revendication 13, dans lequel l'attribut ignorer NpD (277, 305, 405) comprend un drapeau ignorer NpD (275, 306, 406) et au moins une valeur prédéterminée ignorer la raison (276, 308, 408), et dans lequel la fonction de traitement ignorer NpD (250) annule de manière sélective ladite fonctionnalité NpD en fonction du drapeau ignorer NpD (275, 306, 406) et de la au moins une valeur prédéterminée ignorer la raison (276, 308, 408).

15. Système de traitement de demandes de discussion selon la revendication 14, dans lequel la demande de discussion (209, 219, 229) a un état actuel associé, l'état actuel étant l'un d'un certain nombre d'états actuels possibles pour la demande de discussion (209, 219, 229), dans lequel chaque valeur prédéterminée ignorer la raison représente un état actuel possible correspondant pour la demande de discussion (209, 219, 229), dans lequel la fonction de traitement ignorer NpD (250) :
extrait l'attribut ignorer NpD (277, 305, 405) de la mémoire de données (220) ; et
évalue le drapeau ignorer NpD (275, 306, 406) pour déterminer si un traitement ignorer NpD (255) supplémentaire doit être effectué, et si l'évaluation du drapeau ignorer NpD (275, 306, 406) détermine qu'un traitement ignorer NpD (255) supplémentaire doit être effectué ;
détermine l'état actuel de la demande de discussion (209, 219, 229) ; et
pour chacune de la au moins une valeur prédéterminée ignorer la raison (276, 308, 408) compare (257) l'état actuel possible correspondant avec l'état actuel de la demande de discussion (209, 219, 229) ;
dans lequel ladite fonctionnalité NpD est annulée si un quelconque état actuel possible correspondant correspond à l'état actuel de la demande de discussion (209, 219, 229).

16. Système de traitement de demandes de discussion selon la revendication 15, dans lequel chaque état actuel possible du nombre d'états actuels possibles pour la demande de discussion (209, 219, 229) est un état prioritaire de la demande de discussion (209, 219, 229) au moment où elle est reçue.

17. Système de traitement de demandes de discussion selon l'une des revendications 15 ou 16, dans lequel le nombre d'états actuels possibles pour la demande de discussion (209, 219, 229) comprend au moins un état parmi « urgent » et « urgence ».

18. Système de traitement de demandes de discussion selon l'une quelconque des revendications 10 à 17, conçu en outre pour maintenir l'attribut ignorer NpD (277, 305, 405) pour chacun d'une pluralité de dispositifs utilisateurs (201, 202, 203, 204, 500) ou en fonction d'entrées reçues des dispositifs utilisateurs (201, 202, 203, 204, 500).

19. Dispositif utilisateur (201, 202, 203, 204, 500) disposant d'une fonctionnalité de type émetteur-récepteur portatif pour un système de communication disposant d'une fonctionnalité ne pas déranger (200), abrégé par NpD, le dispositif utilisateur (201, 202, 203, 204, 500) comprenant :
une interface utilisateur (515, 530) conçue pour accepter une entrée extérieure afin de modifier un attribut ignorer NpD (277, 305, 405) pour le dispositif utilisateur, l'attribut ignorer NpD concernant un critère ou une condition d'une demande de discussion autre qu'un identifiant du dispositif utilisateur, de façon à annuler de manière sélective la fonctionnalité NpD pour une session de communication demandée par la demande de discussion en fonction dudit attribut ignorer NpD ; et
un générateur de demande d'attribut ignorer NpD (520) réagissant à ladite entrée extérieure, conçu pour envoyer à un serveur de traitement d'appel de réseau (210) une demande de mise à jour de l'attribut ignorer NpD (277, 305, 405) du dispositif utilisateur (201, 202, 203, 204, 500).

20. Dispositif utilisateur (201, 202, 203, 204, 500) selon la revendication 19, dans lequel le dispositif utilisateur (201, 202, 203, 204, 500) est un dispositif sans fil.

21. Dispositif utilisateur (201, 202, 203, 204, 500) selon l'une des revendications 19 ou 20, comprenant en outre :
un dispositif d'affichage de l'interface utilisateur (510) destiné à afficher les modifications pour l'attribut ignorer NpD (277, 305, 405) indiquées par l'entrée extérieure, dans lequel l'interface utilisateur (515) est en outre conçue pour accepter une entrée de demande extérieure d'extraction d'un attribut ignorer NpD (277, 305, 405) pour le dispositif utilisateur (201, 202, 203, 204, 500), le générateur de demande d'attribut ignorer NpD (520) étant en outre conçu pour :
(a) envoyer à un serveur de traitement d'appel de réseau (210) une demande d'extraction de l'attribut ignorer NpD (277, 305, 405) du dispositif utilisateur (201, 202, 203, 204, 500) ; et
(b) recevoir une réponse du réseau (200) à ladite demande ;
dans lequel le dispositif d'affichage de l'interface utilisateur (510) est conçu pour afficher l'attribut ignorer NpD (277, 305, 405) pour le dispositif utilisateur (201, 202, 203, 204, 500) en réponse à la réception par le générateur de demande d'attribut ignorer NpD (520) de la réponse à ladite demande.

22. Support lisible par ordinateur contenant un moyen de codage pour exécution par un processeur du système selon l'une quelconque des revendications 10 à 18 ou du dispositif selon l'une quelconque des revendications 19 à 21 pour mettre en oeuvre le procédé selon l'une quelconque des revendications 1 à 9.
